# EUROPÄISCHE PATENTSCHRIFT

(11) **EP 1 340 529 B1**
(45) Veröffentlichungstag und Bekanntmachung des Hinweises auf die Patenterteilung: **18.05.2005**
(21) Anmeldenummer: 03002458.2
(22) Anmeldetag: 05.07.2000
(51) Int. Cl.: B01D 39/12, B01D 39/20

(54) **Verfahren zur Herstellung eines metallenen Flächengefüges**
Method for producing a flat metal structure
Procédé de production d'une structure plate en métal

(30) Priorität: 27.08.1999 DE 19940792; 07.09.1999 US 152689 P
(43) Veröffentlichungstag der Anmeldung: 03.09.2003
(62) Teilanmeldung aus: 00954301.8
(73) Patentinhaber: GKD-Gebr. Kufferath AG, 52353 Düren (DE)
(72) Erfinder: Wirtz, Peter, 52353 Düren (DE); Mertens, Hans, 52379 Langerwehe-Schlich (DE)
(74) Vertreter: Castell, Klaus, Dr.-Ing.

(56) Entgegenhaltungen:
- DE-A- 1 961 050
- GB-A- 933 825
- NL-A- 8 105 081
- US-A- 5 679 441

## Beschreibung

Die Erfindung betrifft ein Verfahren zur Herstellung eines metallenen Flächengefüges.

Flächengefüge aus Metallgewebe werden vor allem zur Filtration und als Transportband verwendet. Hierbei besteht häufig die Forderung nach einem Gewebe mit einer besonders feinen Oberfläche und einer hohen Stabilität. Hierbei tritt das Problem auf, dass zur Erzielung einer besonders kleinen Porengröße auch besonders feine Drähte verwendet werden müssen, diese feinen Metallgewebe jedoch eine geringe Festigkeit haben.

Um trotzdem eine ausreichende Stabilität des Flächengefüges zu erzielen, werden feine Filterlagen auf ein gröberes Stützgewebe aufgebracht. Dies ermöglicht es, eine hohe Stabilität eines Filtergewebes mit einer extrem feinen Porengrößenverteilung zu kombinieren.

Bei diesen Geweben hat sich jedoch herausgestellt, dass die an der Oberfläche befindlichen Poren leicht verstopfen und dadurch die Funktion des Siebes beeinträchtigen.

Dieses Problem kann durch den Übergang von einer Oberflächenfiltration zu einer Tiefenfiltration gelöst werden. Hierzu werden mehrere feine Filtergewebeschichten übereinander gelegt, so dass die Partikel beim Durchlaufen der feinen Gewebeschichten nach unterschiedlichen Weglängen zurückgehalten werden. Dies führt zu längeren Standzeiten der Siebe, da das Sieb erst dann vollständig verstopft ist, wenn sämtliche Sieblagen blockiert sind.

Die Herstellung derartiger Siebe aus mehreren Lagen feiner Gewebeschichten ist jedoch sehr aufwendig, da mehrere feine Gewebeschichten produziert und miteinander verbunden werden müssen.

Hierzu schlägt die WO 01/15795 A1 unter anderem ein Metallgewebe vor, bei dem ein Metallfasergarn zwischen Drähte eingearbeitet wird, wobei das Metallfasergarn mehr als 100 filigrane Kapillare mit Durchmessern von weniger als 100 µm aufweist.

In einem anderen Kontext beschreibt die DE-OS 1 961 050 ein dichtfädriges Drahtgewebe, in welchem Fadenlagen je aus mehreren miteinander verseilten Drähten bestehen, die aber ebenfalls eingewebt werden sollen.

Es hat sich jedoch herausgestellt, dass Metallfasergarne nicht einfach zu verweben sind und die Gefahr besteht, dass sie während des Webvorgangs beschädigt werden.

Der Erfindung liegt die Aufgabe zugrunde, die Beschädigungsgefahr für ein Metallfasergarn beim Einarbeiten zu reduzieren.

Diese Aufgabe löst ein Verfahren zur Herstellung eines metallenen Flächengefüges, bei welchem ein mit einer Haut umhülltes Metallfasergarn mit einem Metalldraht zu einem Gewebe verwebt und anschließend die Haut entfernt wird. Dabei hält die Haut die einzelnen Fasern des Garnes zusammen und bildet eine glatte Oberfläche, die den Webvorgang erleichtert.

Unter Metallfasergarn wird ein durch Spinnverfahren aus Fasern hergestelltes fadenförmiges Erzeugnis verstanden. Die hierbei verwendeten Fasern können ein Bündel extrem langer gesponnener Fasern sein. Die Fasern können jedoch auch gerissen oder gekürzt sein und zu einem Garn verdrillt sein. Vorzugsweise sind Metallfasergarne aus vielen verdrillten Fasern hergestellt, wobei durch den Faserdurchmesser, die Faserlänge und die Art der Verdrillung oder Nachbehandlung des Garnes unterschiedlichste Garnarten hergestellt werden können.

Im Gegensatz zum Metallfasergarn wird unter einem Metalldraht ein aus Stangenmaterial durch Drahtziehen oder durch Walzen hergestellter Draht verstanden.

Das Zusammenwirken von Metalldraht und Metallfasergarn bringt den großen Vorteil, dass das zwischen dem Metalldraht angeordnete Metallfasergarn in einer geschützten Position z.B. die Aufgabe einer Tiefenfiltration wahrnehmen kann. Das Flächengefüge hat jedoch auch spezielle akustische Eigenschaften und eine hohe Flexibilität, die eine Verwendung in verschiedensten Einsatzbereichen ermöglichen.

Durch die Vergrößerung des Garnanteils kann beispielsweise bei der Filtration die Tiefenfiltrationswirkung erhöht werden, während ein Metalldraht geringeren Durchmessers ausreicht, um die Drainage- und Schutzfunktion zu erfüllen.

Das Flächengefüge kann als Geflecht, Gewirk oder ähnliches ausgebildet sein. Eine einfache Herstellung wird erreicht, wenn der Metalldraht mit dem Metallfasergarn verwebt ist. Dadurch entsteht ein Gewebe, das die Vorzüge eines Drahtgewebes mit den Vorzügen des Metallfasergarngewebes verbindet.

Als besonders vorteilhaft hat es sich bei der Herstellung derartiger Gewebe erwiesen, wenn der Metalldraht die Kette und das Metallfasergarn den Schuss des Gewebes bilden. Das Metallfasergarn ist dadurch geschützt im Gewebe angeordnet und hat im Idealfall keine Knickstellen, die das Garn partiell übermäßig komprimieren könnten.

Gute Versuchsergebnisse wurden erzielt, indem als Metalldraht ein monofiler Draht verwendet wurde. Der monofile Draht ist einfach in der Verarbeitung und eignet sich besonders gut zur Drainage des Flächengefüges.

Vorteilhaft ist es, wenn das Flächengefüge so ausgebildet ist, dass der Metalldraht dem Flächengefüge eine glatte Oberfläche verleiht. Diese glatte Oberfläche kann mit mechanischen Mitteln einfach gereinigt werden und erlaubt es, ein Flächengefüge mit geringer Schichtdicke herzustellen.

Je nach Anwendungsfall kann es vorkommen, dass das beschriebene Flächengefüge eine zu geringe Festigkeit aufweist. In diesem Fall wird vorgeschlagen, dass das Flächengefüge eine Stützschicht aus Metalldraht, vorzugsweise monofilem Draht, aufweist. Diese Stützschicht, die vorzugsweise an einer Seite des Gewebes angebracht ist, kann für Filtrationszwecke so grob gearbeitet sein, dass das Filtrat ungehindert durch die Stützschicht hindurchtritt. Je nach Anwendungsfall des Flächengefüges sind jedoch verschiedenste Arten an Stützschichten möglich.

Insbesondere bei der Verwendung einer Stützschicht wird vorgeschlagen, dass ein Metalldraht, vorzugsweise ein monofiler Draht, das Flächengefüge zusammenhält. Dieser Draht sollte so in das Flächengefüge eingearbeitet sein, dass eine ebene Oberfläche des Flächengefüges erhalten bleibt.

Ein bevorzugtes Ausführungsbeispiel sieht vor, dass ein Schnitt durch das Metallfasergarn mehr als 100, vorzugsweise mehr als 500, einzelne Kapillare aufweist. Ein einzelnes Kapillar hat hierbei einen Durchmesser von weniger als 100 µm und vorzugsweise weniger als 30 µm.

Eine Verfahrensvariante der Erfindung sieht vor, dass die Haut mit einer Flüssigkeit entfernt wird. Als Haut kann beispielsweise Paraffin verwendet werden, das mit 60°C warmem Wasser abwaschbar ist.

Wenn das Flächengefüge vollständig aus Metall besteht, ist es einfach zu verschweißen, und daher wird vorgeschlagen, dass ein vollmetallenes Gewebe zu einem Körper verschweißt wird. Dies ermöglicht es, konische Filterflächen, Filterronden oder beliebige Filtrationskörper herzustellen.

Vor allem für den Einsatz in der Lebensmittelindustrie wird vorgeschlagen, dass als Metallfasergarn und als Metalldraht Edelstahl verwendet wird.

Ein bevorzugter Einsatzbereich eines erfindungsgemäß hergestellten Flächengefüges ist die Tiefenfiltration.

Ein Beispiel für die Anwendung der Erfindung ist in der Zeichnung dargestellt und wird im folgenden näher beschrieben. Es zeigt
- Figur 1: eine Ansicht einer Seitenfläche des Flächengefüges,
- Figur 2: eine Ansicht der Unterseite des Flächengefüges,
- Figur 3: eine Ansicht der gegenüberliegenden Seite des Flächengefüges,
- Figur 4: eine weitere Ansicht des Flächengefüges und
- Figur 5: einen vergrößerten Ausschnitt der in Figur 3 gezeigten Ansicht.

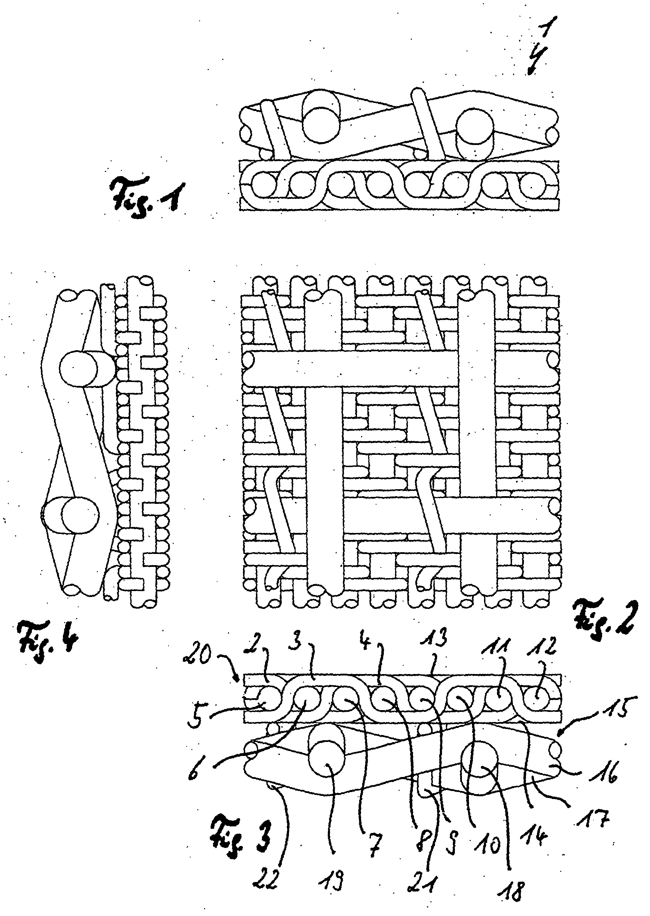

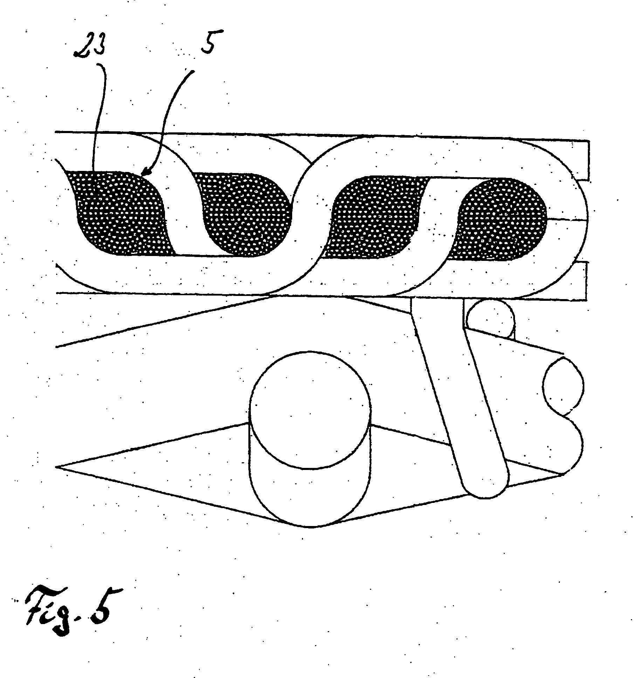

Das in den Figuren gezeigte Flächengefüge 1 besteht aus einer Vielzahl an Metalldrähten 2, 3, 4, die mit einem Metallfasergarn 5 verwebt sind. Hierbei bilden die monofilen Metalldrähte 2, 3 und 4 die Kette, während das Metallfasergarn den Schuss bildet. Beispielsweise die Figur 3 zeigt deutlich, wie beabstandet zueinander mehrere Metallfasergarnstränge 5, 6, 7, 8, 9, 10, 11, 12 angeordnet sind und die monofilen Metalldrähte, wie beispielsweise der monofile Metalldraht 3, abwechselnd oberhalb von zwei Metallfasergarnen 6, 7 und unterhalb von zwei Metallfasergarnen 8, 9 geführt sind. Da der daneben liegende Metalldraht 4 um den Abstand eines Metallfasergarnes 6 versetzt, zunächst oberhalb zweier Metallfasergarne 7 und 8 und dann unterhalb zweier Metallfasergarne 9 und 10 geführt ist, werden die Metallfasergarne durch dazwischenliegende Metalldrähte beabstandet gehalten.

Die parallel zueinander angeordneten Metallfasergarne 5, 6, 7, 8, 9, 10, 11, 12 bilden eine Ebene, und die Oberflächen der Metalldrähte 2, 3, 4 bilden oberhalb und unterhalb dieser Ebene parallele Oberflächen 13 und 14.

Die obere Oberfläche 13 ist besonders glatt ausgestaltet, um einfach reinigbar zu sein und die untere Oberfläche 14 dient der Anlage einer Stützschicht 15. Die Stützschicht 15 wird wiederum aus einem Gewebe aus monofilen Metalldrähten 16, 17, 18, 19 gebildet, die unterhalb der zuvor beschriebenen Gewebeschicht angeordnet ist und von Metalldrähten 16 bis 19 mit einem größeren Durchmesser als den zuvor beschriebenen Metalldrähten 2, 3, 4 gebildet wird.

Im vorliegenden Fall bildet das Gewebe aus den Metalldrähten 2, 3, 4 und dem Metallfasergarn 5 bis 12 die Filtrationsschicht 20 und das Gewebe mit den dickeren Metalldrähten 16 bis 19 die Stützschicht 15. Die Stützschicht 15 ist durch relativ dünne Metalldrähte 21, 22 mit der Filterschicht 20 verbunden.

Das Zusammenwirken zwischen den Metalldrähten 2 bis 4 und dem Metallfasergarn 5 bis 12 zu einem festen Gefüge ist den Figuren 2 bis 5 und insbesondere einer Zusammenschau sämtlicher Figuren zu entnehmen. Für den Fachmann ergibt sich aus den Figuren der genaue Verlauf der einzelnen Drähte.

Die Figuren stellen das Gewebe in stark vergrößerter Weise dar. Insbesondere der Figur 5 ist zu entnehmen, dass das Metallfasergarn 5 aus einem Metallfasergarnstrang aus vielen einzelnen Kapillaren 23 besteht. Der Metallfasergarnstrang 5 legt sich zwischen die monofilen Metalldrähte 2, 3 und 4 der Kette und füllt die von der Kette gebildeten Hohlräume vollständig aus. Dies ist an dem in Figur 5 dargestellten augenförmigen Querschnitt des Metallfasergarnstrangs 5 deutlich zu erkennen.

In der Praxis ist das Gewebe für eine Filterfeinheit von etwa 1 µm bis 200 µm ausgelegt.

Die verwendeten Metallfasergarne haben mehr als 500 einzelne Kapillare mit jeweils einem Durchmesser von unter 30 µm, und die Feinheit dieses Materiales führt dazu, dass beim Verweben das Garn leicht beschädigt wird. Daher wird jeder Faden zunächst mit einer Paraffinschicht überzogen und erst anschließend verwebt. Die Paraffinschicht erleichtert den Webvorgang und schützt das Gewebe. Anschließend kann die Paraffinschicht in 60°C warmen Wasser abgewaschen werden, so dass die Filtrationseigenschaften des Metallfasergarnes wieder hergestellt werden.

Üblicherweise wird das so gebildete Flächengefüge anschließend zu Filterronden oder, je nach Anwendungsfall, zu anderen Filterkörpern verschweißt. Die Verfügbarkeit besonders breiter Webstühle zur Verarbeitung von Metalldrähten ermöglicht die Herstellung von Gewebebahnen mit mehreren Metern breite, die für unterschiedlichste Einsatzzwecke geeignet sind.

## Patentansprüche

1. Verfahren zur Herstellung eines metallenen Flächengefüges, ***dadurch gekennzeichnet, dass*** ein mit einer Haut umhülltes Metallfasergarn (5 bis 12) mit einem Metalldraht (2 bis 4) zu einem Gewebe verwebt und anschließend die Haut entfernt wird.

2. Verfahren nach Anspruch 1, ***dadurch gekennzeichnet, dass*** die Haut mit einer Flüssigkeit entfernt wird.

3. Verfahren nach Anspruch 1 oder 2, ***dadurch gekennzeichnet, dass*** das Gewebe zu einem Körper verschweißt wird.

4. Verfahren nach einem der vorhergehenden Ansprüche, ***dadurch gekennzeichnet, dass*** als Metallfasergarn (5 bis 12) und als Metalldraht (2 bis 4) Edelstahl verwendet wird.

## Claims

1. A method for manufacturing a metallic planar structure, ***characterized in that*** a metal fiber yarn (5 to 12) surrounded by a skin is woven into a fabric together with a metal wire (2 to 4) and that the skin is removed afterwards.

2. The method according to claim 1, ***characterized in that*** the skin is removed by means of a liquid.

3. The method according to claim 1 or 2, ***characterized in that*** the fabric is welded so as to form a body.

4. The method according to one of the afore-mentioned claims, ***characterized in that*** special steel is used to form the metal-fiber yarn (5 to 12) and the metal wire (2 to 4).

## Revendications

1. Procédé de fabrication d'une structure surfacique métallique, ***caractérisé en ce qu'**un* fil en fibre métallique (5 à 12) entouré d'une peau et un fil métallique (2 à 4) sont tissés ensemble en un tissu et que la peau est ensuite retirée.

2. Procédé selon la revendication 1, ***caractérisé en ce que*** la peau est retirée à l'aide d'un liquide.

3. Procédé selon la revendication 1 ou 2, ***caractérisé en ce que*** le tissu est soudé de manière à former un corps.

4. Procédé selon l'une quelconque des revendications précédentes, ***caractérisé en ce que*** de l'acier spécial est utilisé pour le fil en fibre métallique (5 à 12) et le fil métallique (2 à 4).
